(19) **Europäisches Patentamt / European Patent Office / Office européen des brevets**

(11) **EP 2 093 691 A2**

(12) **EUROPEAN PATENT APPLICATION**

(43) Date of publication:
26.08.2009 Bulletin 2009/35

(51) Int Cl.:
*G06F 21/20* (2006.01)

(21) Application number: 08252497.6

(22) Date of filing: 23.07.2008

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.02.2008 TW 97105935**

(71) Applicants:
• **Tatung Company**
**Taipei 104 (TW)**
• **Tatung University**
**Taipei 104 (TW)**

(72) Inventors:
• **Chen, Chih-Cheng**
**Gueishan Township**
**Taoyuan County 333 (TW)**
• **Tseng, Chi-Hsing**
**Taichung City 506 (TW)**
• **Lin, Tzung-Hsi**
**Sijhih City**
**Taipei County (TW)**

(74) Representative: **Johnson, Terence Leslie**
**Marks & Clerk LLP**
**90 Long Acre**
**London**
**WC2E 9RA (GB)**

(54) **Method for generating one-time password**

(57)    A method for generating a one-time password (OTP) by using software only is provided. The method is suitable for generating a common dynamic password in a first electronic device and a second electronic device. First, an initial number is provided to the first electronic device and the second electronic device. Then, a value is generated, encrypted into a transmission value according to the initial number, and transmitted to the second electronic device by the first electronic device (S201). Next, the transmission value is decrypted by the second electronic device according to the initial number to obtain the value. Finally, a dynamic password is respectively generated in the first electronic device and the second electronic device according to the initial number and the value (S213, S215). Thereby, an OTP system is constituted.

FIG. 2

## Description

BACKGROUND OF THE INVENTION

1. Field of the Invention

The present invention generally relates to a communication security method, in particular, to a method for dynamically generating a one-time password (OTP).

2. Description of Related Art

Along with the advancement of technologies, controlling accesses to computers, databases, and communication devices by using passwords has become one of the most well-known techniques. Before accessing a desired resource, a user has to input a correct password to show that the user is authorized to access the resource. Passwords are used almost everywhere in our daily lives. Static passwords are usually used for protecting communications between two parties. However, a static password may be easily cracked once it is stolen and which may cause a serious security problem. Thereby, a concept of one-time password (OTP) is provided in order to overcome the shortage of static passwords.

An OTP is a password used only once. Conventionally, an OTP is generated by using a password token while logging into a server. The OTP generated is discarded after the authentication, and a new password will be generated in the next authentication. Since an OTP is dynamically generated and can be used only once, data security is greatly improved. Generally, OTPs can be categorized into counter-based, mathematical algorithm type, time synchronized type OTPs, and challenge-response type OTPs. A counter-based OTP can generate a theoretically infinite series of passwords after given a seed s, while a time-synchronized type OTP is only valid within a particular time. However, a time synchronized type OTP can be stolen and cracked during its valid time, and a counter-based OTP can still be cracked if several passwords are stolen by a hacker.

Most existing OTP systems in the market generate OTPs by using hardware (password tokens). Accordingly, the hardware cost in developing such an OTP system is high, and besides, the hardware may be lost easily. A challenge-response type OTP is also inconvenient in use.

SUMMARY OF THE INVENTION

Accordingly, the present invention is directed to a method for dynamically generating a password, wherein an initial number is provided in advance to a first electronic device and a second electronic device, and the password is dynamically generated between the first electronic device and the second electronic device according to the initial number so that no seed is transmitted and consequently the security in authentication procedure is improved.

The present invention provides a method for generating a series of passwords. The method is suitable for generating dynamic passwords between a first electronic device and a second electronic device. First, an initial number is provided to both the first electronic device and the second electronic device. Then, a first value is generated, encrypted into a first transmission value using the initial number as the key, and transmitted to the second electronic device by the first electronic device. Next, the second electronic device decrypts the first transmission value using the initial number to obtain the first value. A dynamic password-generating system will be constructed between the first electronic device and the second electronic device according to the initial number and the first value.

According to an embodiment of the present invention, after the step of decrypting the first transmission value to obtain the first value using the initial number in the second electronic device, the second electronic device further generates a second value, encrypts the second value into a second transmission value using the first value as the encryption key, and transmits the second transmission value to the first electronic device. The first electronic device decrypts the second transmission value using the first value as the decryption key to obtain the second value. The dynamic password-generating system will be constructed between the first electronic device and the second electronic device according to the initial number, the first value, and the second value.

According to an embodiment of the present invention, the step of generating the dynamic password includes generating a session key between the first electronic device and the second electronic device according to the first value and the second value so as to dynamically generate subsequent passwords by using the initial number and the session key. The session key is a key used for encrypting data during the entire transaction process. After the session key is generated, new passwords (passwords different from the previous) may be subsequently generated according to the initial number, the session key, and the transaction number during the entire transaction process.

According to an embodiment of the present invention, after the step of decrypting the second transmission value according to the first value in the first electronic device to obtain the second value, the first electronic device further generates a third value, encrypts the third value into a third transmission value using the initial number as the encryption key, and transmits the third transmission value to the second electronic device. The second electronic device then decrypts the third transmission value using the initial number as the decryption key to obtain the third value. Similarly, the second electronic device generates a fourth value, encrypts the fourth value into a fourth transmission value using the initial number, and transmits the fourth transmission value to the first electronic device. The first electronic device then decrypts the fourth transmission value using the initial number as the decryption key to obtain the fourth value. Accordingly, a session key is respectively generated between the first electronic device and the second electronic device according to the second value, the third value, and the fourth value. Finally, the dynamic password-generating system is established by using the initial number and the initial session key.

According to an embodiment of the present invention, the step for respectively generating the dynamic password in the first electronic device and the second electronic device according to the initial number and the first value includes establishing the same password generation function in the first electronic device and the second electronic device and bringing the initial number and the first value into the password generation function to generate the dynamic password.

In the present invention, an initial number is provided in advance to the first electronic device and the second electronic device, and values used for generating the dynamic password are encrypted using the initial number and then transmitted to the other parties. Accordingly, no plaintext dynamic password is transmitted between the first electronic device and the second electronic device. Thereby, man-in-the-middle attacks can be effectively avoided and the security in data transmission can be improved.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a flowchart illustrating a method for generating passwords dynamically according to a first embodiment of the present invention;

FIG. 2 is a flowchart illustrating a method for generating passwords dynamically according to a second embodiment of the present invention; and

FIG. 3 is a flowchart illustrating a method for generating passwords dynamically according to a third embodiment of the present invention.

DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

In existing dynamic password (referred as one-time password, OTP, hereinafter) systems in the market, a set of mutually recognizable code has to be preset between two communication parties or a hardware (token) method has to be adopted in the client device in order to generate dynamic passwords. These methods are very inconvenient to use and difficult to be personalized. Thus, the present invention provides a password generating method, wherein a dynamic password is generated without any hardware or mutually agreed code. Below, embodiments of the present invention will be described with reference to accompanying drawings.

In following embodiments, the first electronic device and the second electronic device may be a client device and a server device; however, the application of the present invention is not limited thereto, and the present invention may be applied to various electronic devices by those having ordinary knowledge in the art according to the actual requirements.

First Embodiment

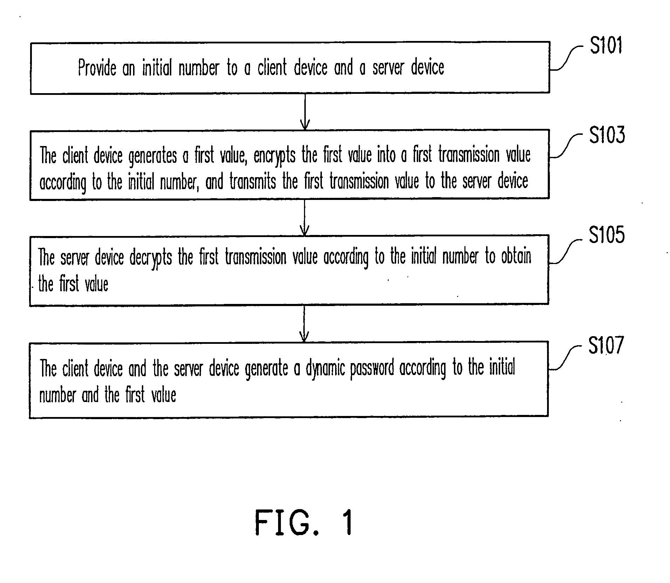

FIG. 1 is a flowchart illustrating a method for generating passwords dynamically according to the first embodiment of the present invention. Referring to FIG. 1, the present embodiment is to generate a common OTP in a client device and a server device. First, in step S101, an initial number is provided to the server device by a user. Taking Internet banking as an example, an initial number is preset in a server device of a bank when a user goes to the bank to open an account. It should be noted that the initial number has to be changed frequently by the user according to the actual requirement in order to maintain the security of the initial number.

Next, when the user is about to start a transaction with the server device in the client device, a preparation operation for generating an OTP is performed in step S103, wherein the client device generates randomly a first value, encrypts the first value into a first transmission value using the initial number as the encryption key, and transmits the first transmission value to the server device. For example, the user installs a software for generating OTPs into any computer system, inputs the initial number preset in the server device into the computer system, and then starts the transaction with the server device. The first value is randomly generated by the client device (or may also be determined by the user) and then encrypted using the initial number. Accordingly, the value (i.e. the first value) used for generating the OTP is not transmitted during the transmission process.

After that, in step S105, the server device receives the first transmission value from the client device and decrypts the first transmission value using the initial number as the decryption key to obtain the first value. Accordingly, the server device also obtains the first value provided by the client device.

Finally, in step S107, the client device and the server device generate the OTP according to the first value and the initial number. For example, the same password generation program is established in the client device and the server device used by the user, and the first value and the initial number are brought into the password generation program to obtain the OTP.

In the first embodiment of the present embodiment, the client device and the server device use the same initial number to encrypt and decrypt the first value so that the client device and the server device can generate the OTP according to the initial number and the first value. Thereby, man-in-the-middle attacks can be prevented. Besides, according to the present invention, a session key may also be first generated and an OTP may be generated using the session key. This will be described below with reference to another embodiment of the present invention.

Second Embodiment

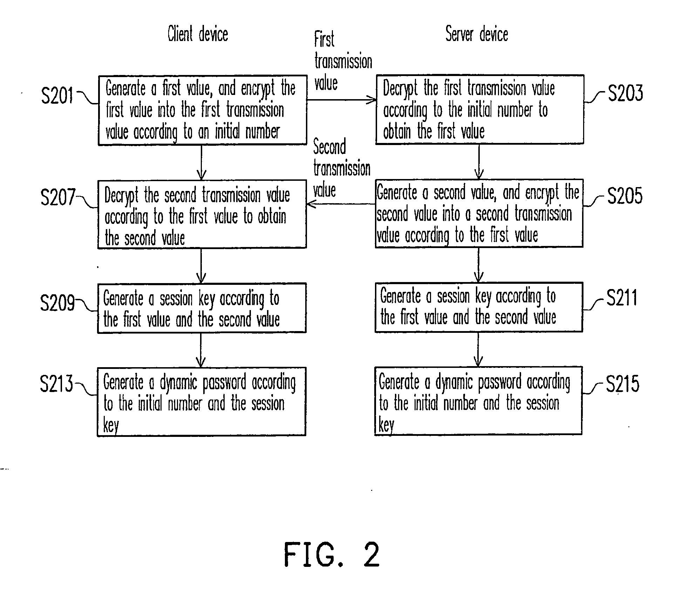

FIG. 2 is a flowchart illustrating a method for generating passwords dynamically according to the second embodiment of the present invention. Referring to FIG. 2, the steps S201 and S203 in the present embodiment are respectively the same as or similar to the steps S103 and S105 in the first embodiment, wherein after the user provides an initial number to the client device and the server device, as in step S201, the client device generates a first value, encrypts the first value into a first transmission value according to the initial number, and transmits the first transmission value to the server device. Next, in step S203, the server device decrypts the first transmission value into the first value according to the initial number.

Next, in step S205, the server device generates a second value, encrypts the second value into a second transmission value according to the first value, and transmits the second transmission value to the client device. When the client device receives the second transmission value, the client device decrypts the second transmission value into the second value according to the first value, as in step S207. The function (or algorithm) for encrypting/decrypting these values in the client device and the server device may be preselected by the user or predetermined in the devices. However, the complexity of the encrypting/decrypting function may be changed according to the actual application and the scope thereof is not limited herein.

Thereafter, the client device and the server device respectively generate a session key according to the first value and the second value, as in step S209 and step S211. Finally, the client device and the server device respectively generate an OTP according to the initial number and the session key, as in step S213 and step S215. To be specific, since the client device and the server device have the same first value and second value, they can respectively generate the session key themselves so that it is not necessary to transmit the session key through the network. After that, the same password generation function is established in the client device and the server device, and the session key and the initial number are brought into the password generation function to obtain the OTP.

Additionally, the client device and the server device may also generate the OTP according to the initial number, the session key, and a transaction number that the client device is about to perform transactions with the server device. Accordingly, the steps S201~S211 do not have to be repeated every time when the client device is about to do transaction with the server device; instead, the OTP generated can be changed according to the transaction number.

It should be mentioned that the client device and the server device may further identify each other by using an initial number. For example, the communication between the two devices may be divided into five stages: initial preparation stage, handshaking stage, session key generation preparation stage (for example, steps S201~S207), session key generation stage (for example, steps S209~S211), and OTP generation stage (for example, steps S213~S215).

During the initial preparation stage, based on the secret sharing principle, each of the server device and the client device keeps part of the secret. A user of the client device has his/her own authentication data, such as an ID and a user account and a password assigned by the server device etc. Besides the authentication data, the server device further stores an initial number submitted by the user in order to correspond to the authentication data thereof. Accordingly, the same initial number is respectively stored in the server device and the client device. The user may update the initial number in the server device after some time so as to improve the security of the initial number. During the handshaking stage, when the server device identifies that the authentication data (such as account ID and password) submitted by the client device is correct, the server device transmits the initial number back to the client device so that the client device can identify the server device.

Once the authentication during the handshaking stage is passed, the user can start the transaction between the client device and the server device. When the user is about to start the transaction in the client device with the server device, the operation for generating an OTP is then performed, namely, foregoing steps S201~S215 are executed.

Additionally, it should be noted that besides foregoing first value and second value, other values may be further generated in the present invention in order to increase the complexity in decrypting the OTP. Below, the steps for generating a password in an actual application will be described with reference to an embodiment of the present invention; however, the present invention is not limited to the embodiment below.

Third Embodiment

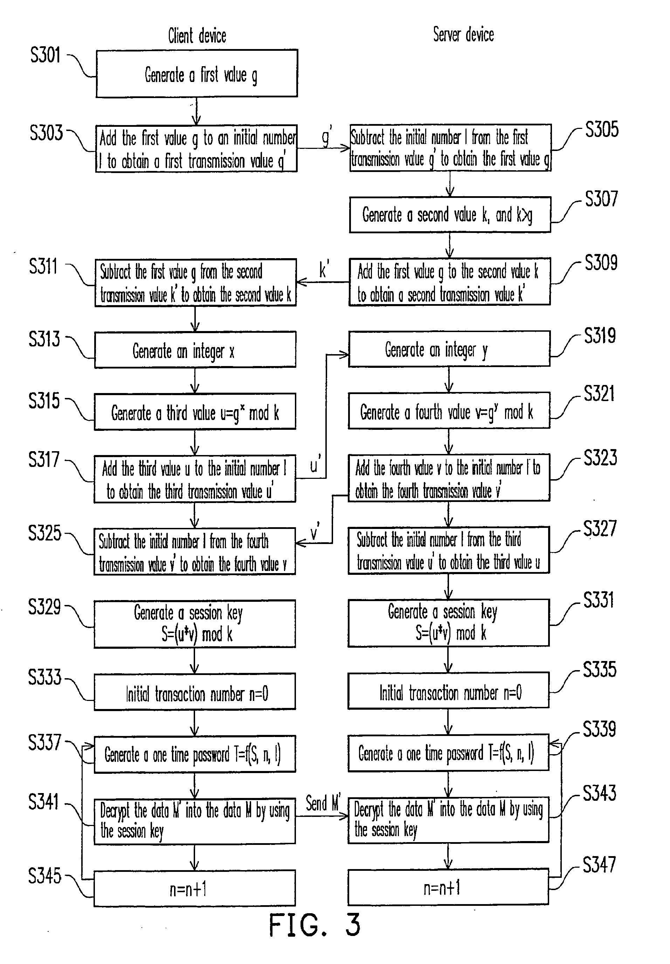

FIG. 3 is a flowchart illustrating a method for generating passwords dynamically according to the third embodiment of the present invention. Referring to FIG. 3, first, in step S301, the client device randomly generates a first value g. Next, in step S303, the first value g is, for example, added to an initial number I to obtain a first transmission value g' (g'=g+I). After that, the client device transmits the first transmission value g' to the server device. Note that functions besides addition are possible. We use addition herein just for explanation purpose and easy understanding.

Next, in step S305, the server device subtracts the initial number I from the first transmission value g' to obtain the first value g (g=g'-I). In step S307, the server device generates a second value k, and k>g. In step S309, the server device adds the first value g to the second value k to obtain a second transmission value k' (k'=k+g). After that, the server device transmits the second transmission value k' to the client device. The first value g and the second value k can be used as a primitive root and a modulo.

After receiving the second transmission value k', the client device subtracts the first value g from the second transmission value k' (k=k'-g) to obtain the second value k, as in step S311. By now, the first value g and the second value k are obtained in both the client device and the server device.

Next, to obtain the common session key S, the client device randomly generates an integer x in step S313. After that, in step S315, the client device brings the integer x into the formula $u=g^x \bmod k$ to obtain a third value u. In step S317, similar to the foregoing step for obtaining the first transmission value g', the third value u is added to the initial number I to obtain a third transmission value u' (u'=u+I), and the third transmission value u' is then transmitted to the server device.

On the other hand, in step S319, the server device randomly generates another integer y. Next, in step S321, the integer y is brought into the formula $v=g^y \bmod k$ to obtain a fourth value v, and in step S323, the fourth value v is added to the initial number I to obtain a fourth transmission value v' (v'=v+I). The fourth transmission value v' is then transmitted to the client device.

When the client device and the server device respectively receive the fourth transmission value v' and the third transmission value u', the client device and the server device respectively subtract the initial number I from the fourth transmission values v' and the third transmission value u' to obtain the fourth value v and the third value u, as in step S325 and step S327. Accordingly, both of the client device and the server device obtain the first value g, the second value k, the third value u, and the fourth value v.

In addition, the server device needs not to wait and randomly generate the integer y until it receives the third transmission value u'. Instead, the server device may also generate the integer y at the same time when the client device randomly generates the integer x. Foregoing assumption is only for the convenience of the description but not for restricting the scope of the present invention.

Next, the session key generation stage is entered, wherein the client device and the server device respectively bring the second value k, the third value u, and the fourth value v into the formula $S=(u*v) \bmod k$ to obtain the session key S, as in step S329 and step S331.

After that, the client device and the server device respectively enter the OTP generation stage as in step S333 and step S335. In step S337 and step S339, a transaction number n that the client device is about to do transactions with the server device (the initial transaction number n=0), the session key S, and the initial number I are brought into a formula $T=f(S, n, I)$ to obtain an OTP T, wherein f may be any non-linear function.

Accordingly, in step S341, the client device encrypts data M to be transmitted (for example, in a financial electronic transaction, M additionally contains a password, namely, the OTP generated in the present embodiment, of a client) by using the session key S to obtain encrypted data M' and transmits the encrypted data M' to the server device. After receiving the encrypted data M', the server device decrypts the encrypted data M' by using the session key S to obtain the data M, as in step S343.

Finally, in step S345 and step S347, the client device and the server device respectively add 1 to the transaction number n stored therein so that when next time a transaction is performed, step S337 and step S339 are executed and an OTP T can be generated again by using the transaction number n, the session key S, and the initial number I. In other words, the transaction number n stored in the client device and the server device is initially 0, and after the current transaction is finished, the transaction number n is increased by 1 so that a different OTP can be generated when a next transaction is performed.

In overview, according to the embodiments described above, the same initial number is stored in the client device and the server device for generating an OTP T, and the OTP T is transmitted by the client device to the server device so that the server device can authenticate the client device according to the OTP T. Thereby, man-in-the-middle attacks can be prevented and communication security is improved. Moreover, no pre-agreed code or other hardware device is used in the present invention so that the OTP generation method provided by the present invention is very convenient to use.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for generating passwords dynamically, suitable for generating common dynamic passwords in a first electronic device and a second electronic device, the method comprising:

   providing an initial number to the first electronic device and the second electronic device; generating a first value, encrypting the first value into a first transmission value according to the initial number, and transmitting the first transmission value to the second electronic device by using the first electronic device; decrypting the first transmission value according to the initial number to obtain the first value by using the second electronic device; and respectively generating the dynamic password in the first electronic device and the second electronic device according to the initial number and the first value.

2. A method for generating a password according to claim 1, wherein after the step of decrypting the first transmission value according to the initial number to obtain the first value by using the second electronic device further comprises:

   generating a second value, encrypting the second value into a second transmission value according to the first value, and transmitting the second transmission value to the first electronic device by using the second electronic device; decrypting the second transmission value according to the first value to obtain the second value by using the first electronic device; and respectively generating the dynamic password in the first electronic device and the second electronic device according to the initial number, the first value, and the second value.

3. A method for generating a password according to claim 2, wherein the step of respectively generating the dynamic password in the first electronic device and the second electronic device according to the initial number, the first value, and the second value comprises:

   respectively generating a session key in the first electronic device and the second electronic device according to the first value and the second value so as to generate the dynamic password according to the initial number and the session key.

4. A method for generating a password according to claim 3, wherein the step of generating the dynamic password by using the initial number and the session key comprises:

   obtaining a transaction number that the first electronic device is about to do transaction with the second electronic device so as to generate the dynamic password according to the initial number, the session key, and the transaction number.

5. A method for generating a password according to claim 2, wherein after the step of decrypting the second transmission value according to the first value to obtain the second value by using the first electronic device further comprises:

   generating a third value, encrypting the third value into a third transmission value according to the initial number, and transmitting the third transmission value to the second electronic device by using the first electronic device; decrypting the third transmission value according to the initial number to obtain the third value by using the second electronic device; generating a fourth value, encrypting the fourth value into a fourth transmission value according to the initial number, and transmitting the fourth transmission value to the first electronic device by using the second electronic device; decrypting the fourth transmission value according to the initial number to obtain the fourth value by using the first electronic device; and respectively generating a session key in the first electronic device and the second electronic device according to the second value, the third value, and the fourth value so as to generate the dynamic password according to the initial number and the session key.

6. A method for generating a password according to claim 5, wherein the session key is generated according to the following formula:

$$S=(u*v) \bmod k;$$

   wherein S represents the session key, k represents the second value, u represents the third value, and v represents the fourth value.

7. A method for generating a password according to claim 5, wherein the third value is generated by using the first electronic device according to following formula:

$$u=g^x \bmod k;$$

wherein u represents the third value, g represents the first value, k represents the second value, and x represents a random integer.

8. A method for generating a password according to claim 5, wherein the fourth value is generated by using the second electronic device according to following formula:

$$v = g^y \bmod k;$$

wherein v represents the fourth value, g represents the first value, k represents the second value, and y represents a random integer.

9. A method for generating a password according to claim 1, wherein the first value is generated and encrypted into the first transmission value according to the initial number by using the first electronic device according to following formula:

$$g' = g + I;$$

wherein g' represents the first transmission value, g represents the first value, and I represents the initial number.

10. A method for generating a password according to claim 1, wherein the first transmission value is decrypted according to the initial number by using the second electronic device according to following formula:

$$g = g' - I;$$

wherein g' represents the first transmission value, g represents the first value, and I represents the initial number.

11. A method for generating a password according to claim 1, wherein the step of respectively generating the dynamic password in the first electronic device and the second electronic device according to the initial number and the first value comprises:

establishing a same password generation function in the first electronic device and the second electronic device; and
bringing the initial number and the first value into the password generation function to generate the dynamic password.

| Provide an initial number to a client device and a server device | S101 |

| The client device generates a first value, encrypts the first value into a first transmission value according to the initial number, and transmits the first transmission value to the server device | S103 |

| The server device decrypts the first transmission value according to the initial number to obtain the first value | S105 |

| The client device and the server device generate a dynamic password according to the initial number and the first value | S107 |

# FIG. 1

Client device     First transmission value     Server device

| | |
|---|---|
| S201 — Generate a first value, and encrypt the first value into the first transmission value according to an initial number | Decrypt the first transmission value according to the initial number to obtain the first value — S203 |

Second transmission value

| | |
|---|---|
| S207 — Decrypt the second transmission value according to the first value to obtain the second value | Generate a second value, and encrypt the second value into a second transmission value according to the first value — S205 |
| S209 — Generate a session key according to the first value and the second value | Generate a session key according to the first value and the second value — S211 |
| S213 — Generate a dynamic password according to the initial number and the session key | Generate a dynamic password according to the initial number and the session key — S215 |

# FIG. 2

Client device                                    Server device

S301 — Generate a first value g

S303 — Add the first value g to an initial number    g'    Subtract the initial number I from the first — S305
I to obtain a first transmission value g'              →    transmission value g' to obtain the first value g

                                                           Generate a second value k, and k>g — S307

S311 — Subtract the first value g from the second   k'    Add the first value g to the second value k — S309
transmission value k' to obtain the second value k   ←    to obtain a second transmission value k'

S313 — Generate an integer x                             Generate an integer y — S319

S315 — Generate a third value u=g^x mod k                Generate a fourth value v=g^y mod k — S321

S317 — Add the third value u to the initial number I  u'   Add the fourth value v to the initial number I to — S323
to obtain the third transmission value u'                  obtain the fourth transmission value v'

S325 — Subtract the initial number I from the fourth  v'   Subtract the initial number I from the third — S327
transmission value v' to obtain the fourth value v   ←    transmission value u' to obtain the third value u

S329 — Generate a session key                            Generate a session key — S331
S=(u*v) mod k                                            S=(u*v) mod k

S333 — Initial transaction number n=0                    Initial transaction number n=0 — S335

S337 — Generate a one time password T=f(S, n, I)         Generate a one time password T=f(S, n, I) — S339

S341 — Decrypt the data M' into the data M by using  Send M'  Decrypt the data M' into the data M by using — S343
the session key                                      →    the session key

S345 — n=n+1                                             n=n+1 — S347

FIG. 3